# EUROPEAN PATENT SPECIFICATION

(11) **EP 2 325 542 B1**
(45) Date of publication and mention of the grant of the patent: **20.03.2013**
(21) Application number: 09014417.1
(22) Date of filing: 18.11.2009
(51) Int. Cl.: F23C 1/08, F23C 7/00, F23R 3/14, F23R 3/28, F02C 7/22

(54) **Swirler vane, swirler and burner assembly**
Verwirbelungsschaufel, Verwirbeler und Brennanordnung
Aube de turbulence, turbulence et ensemble de brûleur

(43) Date of publication of application: 25.05.2011
(73) Proprietor: Siemens Aktiengesellschaft, 80333 München (DE)
(72) Inventor: Headland, Paul, LN1 1NA lincoln (GB); Sanderson, Victoria, NG24 4SR Newark (GB)

(56) References cited:
- EP-A1- 1 217 095
- EP-A1- 1 918 638
- DE-A1-102006 036 520
- DE-U1- 20 018 375
- GB-A- 2 085 147
- GB-A- 2 253 476
- US-A- 3 958 413
- US-A1- 2009 255 102

## Description

The present invention relates to a swirler vane for providing fuel, particularly liquid fuel, to a swirling zone of a burner assembly, comprising at least one injection hole for injecting the fuel to the swirling zone of the burner and an injection feed hole connecting the at least one injection hole with a main fuel feed. The invention relates further to a swirler, comprising a plurality of swirler vanes, and to a burner assembly, in particular of a gas turbine engine.

Such a burner assembly is known from the publication EP1918638A1, which describes a gas turbine burner comprising a swirler having vanes delimiting external air passages between them vanes. The vanes comprise at least one main inlet opening, at least one main outlet opening located in a vane wall and at least one internal main passage extending from the main inlet opening through the vane to the main outlet opening and a fuel injection system inside the vanes comprising a fuel outlet opening open towards the internal main passage so as to allow for injecting fuel into the internal main passage and thereby mixing air with fuel.

Air pollution is a worldwide concern and many countries have enacted stricter laws for further limiting the emission of pollutants from gas turbine engines or offer fiscal or other benefits for environmentally sound installations.

Although the prior techniques for reducing the emissions of NOₓ from gas turbine engines are steps in the right direction, the need for additional improvements remains.

The main purpose of a burner assembly of a gas turbine engine is to mix fuel with air to obtain stable and efficient combustion with good flame stability and the smallest possible amount of NOₓ emissions. Therefore, the burner assembly design must ensure that proper amounts of fuel are introduced in the right locations within the burner assembly, that these amounts of fuel are thoroughly mixed with air, and that the wanted fuel vaporization takes place.

To achieve low emissions the combustion efficiency for fuel has to be improved. This can be achieved, for example, by a good atomization and a good vaporization of liquid fuel, whereby better atomization allows more vaporization.

Usually the premixing of liquid fuel and air in a gas turbine engine takes place by injecting liquid fuel into an air stream in a swirling zone of the burner assembly which is located upstream from the combustion zone of the burner assembly. The swirling produces a mixing of liquid fuel and air before the mixture enters the combustion zone. The better the mixing of liquid fuel and air and the better the vaporization of the liquid fuel the less emissions can be achieved. Swirlers may be provided to gain better mixing of fuel and air. Swirlers are comprised of swirler vanes defining swirl slots, arranged in such a way that air, into which fuel is injected, will start a rotational movement which results in a better fuel and air mixture. Liquid fuel provided by a main liquid fuel feed will be injected into the air stream through injection feed holes. The swirler vanes are guiding the air flow, enriched by the fuel, into a combustion zone. The liquid fuel is further atomised by the use of a nozzle positioned on the base of the injection hole or the swirl slot. One disadvantage of the nozzle is that it injects the fuel in a non optimised location due to the mechanical constraints of the system.

An object of the present invention is to provide an improved swirler vane, an improved swirler and an improved burner assembly, which enable a good fuel and air mixing - particularly the mixing of liquid fuel and air - and which reduce the emissions of the burner assembly of a gas turbine. Furthermore an improved serviceability of a swirler and a burner assembly is desired.

The objective is achieved by a swirler vane with the features according to claim 1, by a swirler with the features according to claim 6, and by a burner assembly with the features according to claim 12. Advantages, features, details, aspects and effects of the invention arise from the dependent claims, the description and the figures. Features and details which are described in connection with the swirler vane count as well for the swirler and the burner assembly, and vice versa.

According to a first aspect of the present invention the objective is achieved by a swirler vane for providing fuel, particularly liquid fuel, to a swirling zone of a burner assembly, comprising at least one injection hole for injecting the fuel to the swirling zone of the burner assembly and an injection feed hole passages - particularly comprising a section in form of a gallery - connecting the at least one injection hole with a main fuel feed, whereby the swirler vane or a tip of the swirler vane, where the at least one injection hole is arranged, is being manufactured - i.e. built up - by laser deposition or comprises at least a surface being manufactured by laser deposition.

The swirler vane or a tip of the swirler vane is built up using laser deposition. One advantage of such a laser deposition grown swirler vane or such a tip of the swirler vane is that the heat treatment during the laser deposition relaxes stresses due to thermal expansion mismatch in the swirler vane, in particular between the swirler vane and the film, since growth occurs at high temperatures, around about 800°C. The design and shape of a swirler vane or a tip of a swirler vane can be influenced very exactly. The swirler itself can be made using conventional machining methods. In order to allow the fuel - particularly liquid fuel - to be injected at the tip of the swirler vane at least a portion of the tip is built up using laser deposition.

Laser deposition or pulsed laser deposition is a thin film deposition technique where a high power pulsed laser beam is focused inside a vacuum chamber to strike a target of a desired composition. Thereby material is vaporized from the target and deposited as a thin film on the swirler vane and the wall of the injection hole and/or the injection feed hole passages inside the swirler vane, respectively. Such a swirler vane or such a tip of a swirler vane is very heat resistant. The friction resistance of the injection hole and/or the injection feed hole is decreased by a laser depositioned surface. Therefore the fuel can be guided through the injection feed hole passages and/or the injection hole much more accurate. A swirler vane or the tip of a swirler vane which are built up using laser deposition can accurately control the fuel being injected. A swirler vane like that can improve the fuel and air mixing. The fuel can be injected very accurately into the swirler shear layer. Such a swirler vane can reduce the emissions of the burner assembly.

One swirler vane can have two or more injections holes, if desired.

Therefore, in a preferred embodiment of the swirler vane, the swirler vane is characterized in that the wall of the at least one injection hole is being manufactured - i.e. built up or formed - by laser deposition. Additional or alternative to that a swirler vane is preferred whereby at least a part of the injection feed hole passages, which end in the at least one injection hole, is being manufactured by laser deposition.

Preferred is further an embodiment of the swirler vane, whereby the swirler vane is shaped as a pie slice. For example, the swirler vanes can be of a pie slice type with substantially triangular footprints and rectangular side faces and a slightly curved outer surface. The tips of the swirler vane, where the at least one injection hole is arranged, are directed to the swirling zone of the burner assembly.

The shape of the at least one injection hole can vary. The injection hole can take whatever shape for good mixing, as it is formed using laser deposition. In a preferred embodiment of the swirler vane the at least one injection hole of the swirler vane has a rectangular, a circular, a polygonal, an oval or a triangular shape. The at least one injection hole of the swirler vane can be shaped like a slot. The injection hole or holes can be located on either the pressure or suction side or on both sides of the swirl slot in order to give optimised mixing.

Preferred is further an embodiment of the swirler vane, whereby the swirler vane is characterized in that a perforated plate, which comprises one or several holes, is being placed into the at least one injection hole. Such a perforated plate can be placed into the laser deposited injection hole to give a very fine control of the fuel - particularly of liquid fuel - being injected to the swirling zone of the burner assembly. In particular a pre calibrated micro laser drilled plate can be placed into the injection holes of each laser deposited swirler tip, to give fine control of the fuel being injected to the burner assembly.

According to a second aspect of the invention the objective is achieved by a swirler, in particular a swirler of a burner assembly of a gas turbine engine, comprising a plurality of swirler vanes according to the first aspect of the invention. A swirler with a plurality of swirler vanes, which are built for providing fuel, particularly liquid fuel, to a swirling zone of a burner assembly, comprising at least one injection hole for injecting the fuel to the swirling zone of the burner assembly and injection feed hole passages - particularly an injection feed hole gallery - connecting the at least one injection hole with a main fuel feed, particularly for liquid fuel, whereby the swirler vane or a tip of the swirler vane, where the at least one injection hole is arranged, is being manufactured by laser deposition or comprises at least a surface being manufactured by laser deposition, can improve the mixing of the fuel and air in the swirling zone, which is placed upstream the combustion zone of the burner assembly. The flow of the fuel through the injection holes and the injection feed holes passages can be increased and better controlled, respectively. The mixing of the fuel with air can be improved by injection of the fuel into the swirler shear layer. Such a swirler can reduce the emissions of the burner assembly of the gas turbine engine.

In an embodiment of the swirler not forming part of the invention, the swirler vanes build a first part of overall swirler vanes, whereby a second part of the overall swirler vanes comprise at least one second injection hole for injecting gaseous fuel to the swirling zone of the burner assembly and second injection feed hole passages connecting the at least one second injection hole with a main gaseous fuel feed. Advantageously the first parts of the overall swirler vanes build an inner swirler and the second part of the overall swirler vanes build an outer swirler. The swirler can be split into two parts, namely an inner swirler and an outer swirler. The inner swirler is responsible for the liquid fuel supply from the main liquid fuel inlet to the swirling zone of the burner. The outer swirler is responsible for the air supply from the air inlet to the swirling zone of the burner assembly. The outer swirler is furthermore responsible for the gaseous fuel supply from the main gaseous fuel inlet to the swirling zone of the burner assembly. The swirler is built modular. In a mounted position the two swirler parts are fixed in such a way that the swirler vanes, which are part of the inner swirler, and the swirler vanes, which are part of the outer swirler, build overall vanes. These overall vanes are preferably shaped as a pie slice. The inner swirler may be formed in pie slice form itself and may form the tip of the overall pie sliced vanes, once assembled. Walls of the vanes of the inner swirler part and walls of vanes of the outer swirler part will be aligned when mounted to gain the overall pie slice form. The pie slice shape of the two part together then, during operation, provide the feed of the air and the fuel/air mixture to the combustor. This modularization of the swirler components results in an improved serviceability. In other words, this embodiment not forming part of the invention is directed to a swirler comprising a plurality of swirler vanes positioned radially around a central axis of the swirler and a plurality of mixing channels for mixing fuel and air, the swirler being assembled from a first swirler piece and a separate second swirler piece, the first swirler piece comprises a first platform on which a plurality of first sections of the plurality of swirler vanes is attached and the second swirler piece comprises a second platform on which a plurality of second sections of the plurality of swirler vanes is attached. The swirler being assembled such as the plurality of first sections form a downstream section of walls of the mixing channels and the plurality of second sections form an upstream section of the walls of the mixing channels. Thus, the two separate pieces can be manufactured separately and provide a modular layout of the swirler. This is advantageous because only the first piece or only the second piece may be replaced during service. The first and the second piece will be assembled in such a way that the form mixing channels with walls in which the downstream section of the walls are a direct continuation of the upstream section of the walls, such as the downstream section of a specific wall lies in the same plane as the upstream section of the wall. Advantageously, as indicated before, the first piece will define an inner region of the swirler and the second piece will define an outer region of the swirler. Preferably, the first piece will be in shape of a circle with an outer radius R and the second piece will be in a torus-like shape, with an inner radius having the same radius R as the outer radius of the first piece. The pilot burner and the adaptor plate, which fixed the swirler parts, can be retained compared to a known burner assembly of gas turbine engine. Only the swirler differs to the known burner assemblies of gas turbine engines. The two swirler elements, namely the inner and the outer swirler, can be made using conventional machining methods. In order to allow the fuel - particularly liquid fuel - to be injected at the tip of each swirler vane a portion of the tip is built up using laser deposition.

According to a third aspect of the invention the objective is achieved by a burner assembly, in particular of a gas turbine engine, comprising a swirler according to the second aspect of the invention. A burner assembly with a swirler comprising a plurality of swirler vanes according to the first aspect of the invention can improve the mixing of the fuel and the air in the swirling zone of a burner assembly. That means, a burner assembly with a swirler with a plurality of swirler vanes, which are built for providing fuel to a swirling zone of a burner, comprising at least one injection hole for injecting the fuel to the swirling zone of the burner assembly and injection feed hole passages connecting the at least one injection hole with a main fuel feed, whereby the swirler vane or a tip of the swirler vane, where the at least one injection hole is arranged, is being manufactured by laser deposition or comprises at least a surface being manufactured by laser deposition, can improve the mixing of the fuel and the air in the swirling zone, which is placed upstream the combustion zone of the burner assembly. The flow of the fuel through the injection holes and the injection feed hole galleries can be increased. Such a burner assembly can reduce the emissions of the gas turbine engine.

In the embodiment not forming part of the invention the burner assembly is characterized in that the inner swirler is fixed to a main liquid fuel inlet, which comprises the main liquid fuel feed. The inner swirler can be fixed friction locked and/or material locked at the main liquid inlet of the burner assembly. The outer swirler can be fixed friction locked and/or material locked at the adapter plate of the burner assembly.

Even though in some incidents specifically liquid fuel is referred to, the inventive concept also applies, without limitation, to a feed with gaseous fuel or even both types of fuel.

Further features, properties and advantages of the present invention will become clear from the following description of embodiments of the invention in conjunction with the accompanying drawings, which shown schematically.
- Figure 1: shows a perspective view of an inventive swirler with inventive swirler vanes and the swirling zone of a burner assembly;
- Figure 2: shows a perspective section view of a burner assembly and of an inventive swirler;
- Figure 3: shows a perspective view of a section of an inner swirler and a main liquid fuel feed;
- Figure 4: shows another perspective view of a section of an inner swirler and a main liquid fuel feed according to figure 3;
- Figure 5: shows another perspective view of a section of an inner swirler and a main liquid fuel feed according to figure 3;
- Figure 6: shows a sectional view through a burner assembly;
- Figure 7: shows an enlarged sectional view through an injection area of a swirler vane of the inner swirler;
- Figure 8: shows a perspective view of some inventive swirler vanes of an inner swirler.

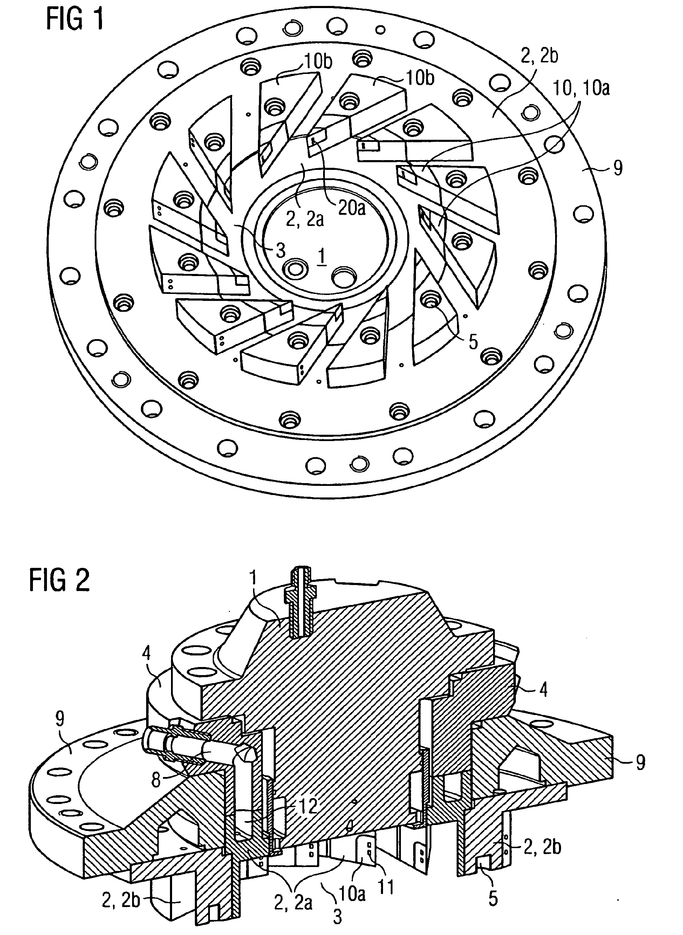

Elements with the same function and mode of operation are provided in the fig. 1 to 8 with the same references.

Fig. 1 shows a perspective view of a possible embodiment of an inventive swirler 2 with inventive swirler vanes 10a and a swirling zone 3 of a burner assembly having a pilot burner 1 in its centre. The swirler 2 is split into two parts, an inner swirler 2a and an outer swirler 2b. The swirler vanes 10a build a first part of overall swirler vanes 10, whereby the swirler vanes 10b build the second part of the overall swirler vanes 10 of the swirler 2. The inner swirler 2a comprises two or more swirler vanes 10a. Each swirler vane 10a provides fuel - preferably liquid fuel but possibly also gaseous fuel - to a swirling zone 3 of the burner assembly. In this embodiment of the swirler 2 the tip 20a of each swirler vane 10a of the inner swirler 2a is built up using laser deposition. The tip 20a as a whole can be manufactured by laser deposition or only the surface of the tip 20a is can be manufactured by laser deposition. One swirler vane 10a of the inner swirler 2a and one swirler vane 10b of the outer swirler 2b build an overall swirler vane 10, which is of a pie slice shape. Each swirler vane 10b of the outer swirler 2b has at least one injection hole 5 for injecting air to the swirling zone 3.

Fig. 2 shows a perspective section view of a burner assembly and of an inventive swirler 2. Liquid fuel is guided through the main liquid fuel feed inlet 8 of the main liquid fuel burner section 4 to injection feed hole passages 12 in form of a gallery in the inner swirler 2a. The injection feed hole passages 12 of the inner swirler 2a guide the liquid fuel to the injection holes 11 in the swirler vanes 10a and the tip of the swirler vanes 10a of the inner swirler 2a, respectively. The inner swirler is fixed, in particular welded or bolted, to the adaptor plate 9. The adaptor plate 9 receives positive locking the main liquid fuel burner section 4 and the inner swirler 2a. Furthermore, the adaptor plate 9 fixed the outer swirler 2b, as well. The inner swirler 2a is arranged inside the outer swirler 2b. Each swirler vane 10b of the outer swirler 2b has at least one injection hole 5 for injecting air to the swirling zone 3.

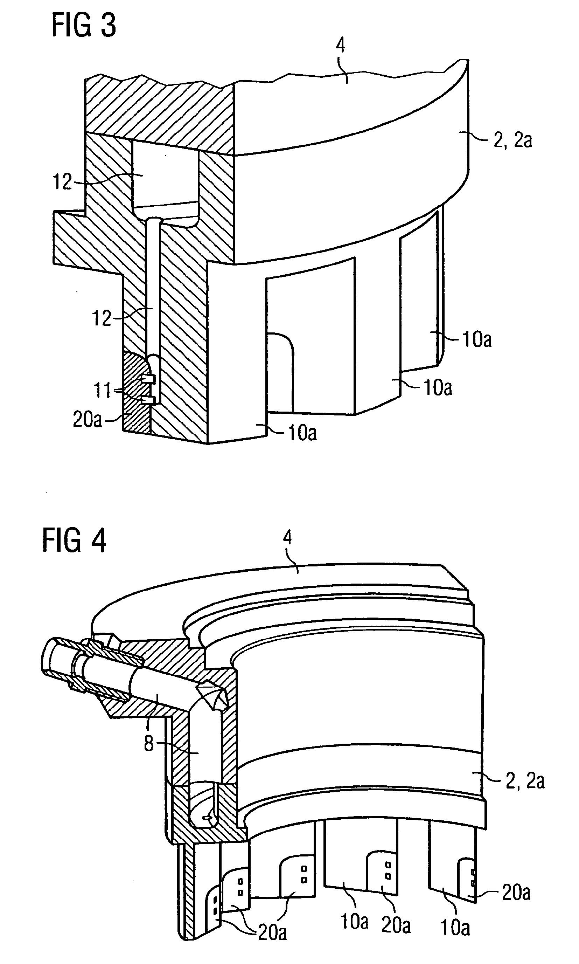

Fig. 3 shows a perspective view of a section of an inner swirler 2a and a main liquid fuel burner section 4. The liquid fuel coming from the main liquid fuel inlet 8 is guided through the gallery of the injection feed hole passages 12 in the inner swirler 2a to every swirler vane 10a. From the gallery as part of the injection feed hole passages 12 a connection is present that ends with the injection holes 11 of each swirler vane 10a. This connection is marked in Fig. 3 with the reference sign 12, because it is also part of the injection feed hole passages 12. The tip 20a of each swirler vane 10a, where the injection hole 11 is arranged, is being manufactured by laser deposition or comprises at least a surface being manufactured by laser deposition.

Fig. 4 shows another perspective view of a section of an inner swirler 2a and a main liquid fuel burner section 4 according to fig. 3. The tips 20a of each swirler vanes 10a are being manufactured by laser deposition or comprise at least a surface being manufactured by laser deposition. The inner swirler 2a is arranged in a way that the injection feed hole passages 12 are aligned with the main liquid fuel inlet 8 of the main liquid fuel burner section 4.

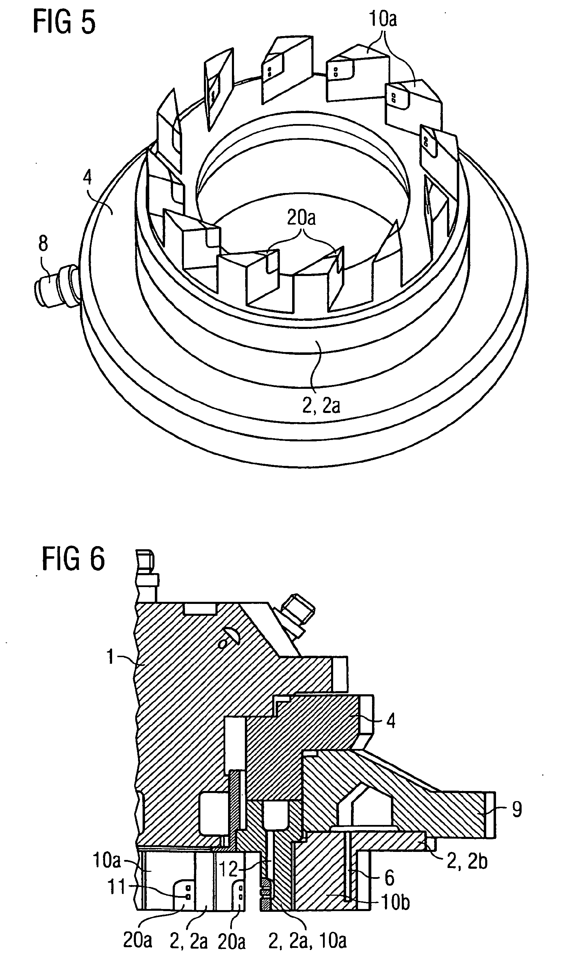

Fig. 5 discloses another perspective view of a section of an inner swirler 2a and a main liquid fuel burner section 4 according to figure 3. The inner swirler 2a comprises a couple of swirler vanes 10a. The tip 20a of each swirler vane 10a where the injection holes 11 are arranged, is being manufactured by laser deposition or comprises at least a surface being manufactured by laser deposition. The main liquid fuel burner section 4 comprises a main liquid fuel inlet 8 which guides the liquid fuel to the inner swirler 2a.

In Fig. 6 is a sectional view through a burner assembly shown. The main liquid fuel burner section 4 is fixed between the pilot burner 1 and the adaptor plate 9. The swirler 2 is divided into two parts. The first part is being built by the inner swirler 2a and the second part is being built by the outer swirler 2b. The inner swirler 2a is responsible for guiding liquid fuel coming from the main liquid fuel inlet 8 to the swirling zone 3 of the burner assembly. Therefore, the inner swirler 2a comprises injection feed hole passages 12 which are guiding the liquid fuel to the injection holes 11 in the tip 20a of each swirler vane 10a. The tip 20a of each swirler vane 10a is being manufactured by laser deposition or comprises at least a surface being manufactured by laser deposition. This makes the injection holes 11 in the tip 20a of each swirler vane very definitely, so that the liquid fuel can be channeled very accurate to the swirling zone of the burner assembly. This results in a better mixing of the liquid fuel and air.

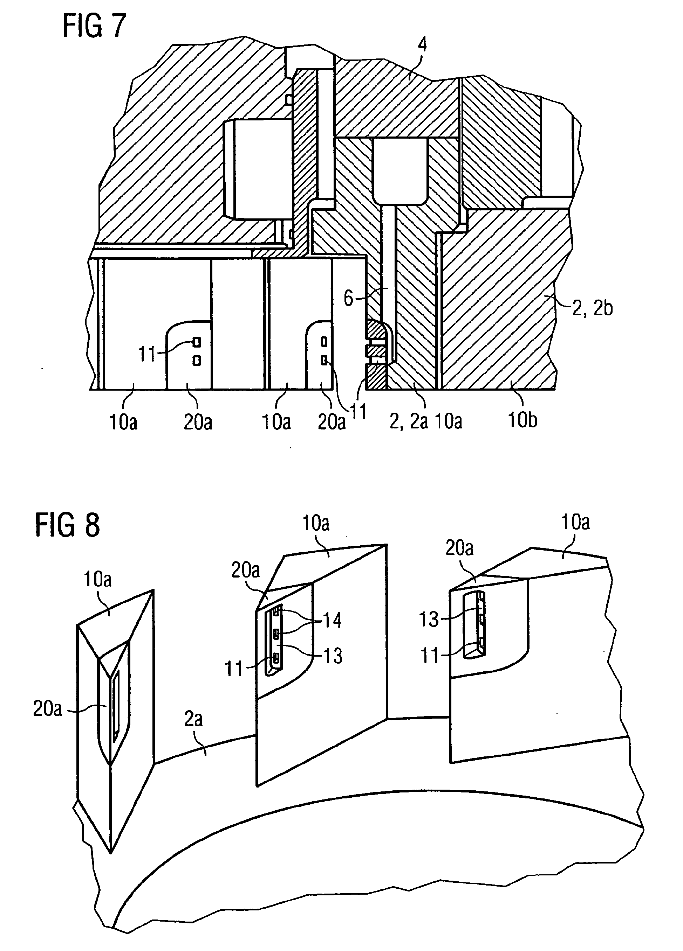

Fig. 7 shows an enlarged sectional view through an injection area of a swirler vane 2 of the inner swirler 2a. The inner swirler 2a comprises a couple of swirler vanes 10a. Each swirler vane comprises a tip 20a, which is manufactured by laser deposition or comprises at least a surface being manufactured by laser deposition. In the tip 20a of each swirler vane 10a are injection holes 11 arranged. In this embodiment the tip 20a of each swirler vane 10a has two injection holes 11. The injection holes are being built very exact because of the laser deposition. That enables the injection holes 11 to control the direction and the amount of the injected liquid fuel very accurate.

Fig. 8 shows a perspective view of some inventive swirler vanes 10a of an inner swirler 2a. The injection holes 11 of each swirler vane 10a are arranged in the tip 20a of each swirler vane 10a. The tip 20a is manufactured by laser deposition or comprises at least a surface being manufactured by laser deposition. Especially the injection holes 11 are being built by laser deposition or comprise at least a surface being manufactured by laser deposition. The injection holes 11 are shaped like a slot. In this possible embodiment of a swirler vane 10 in each slot is a perforated plate 13 with three holes 14 arranged. Generally, a perforated plate 13 can have one or more holes 14. The injection of the liquid fuel can be controlled very accurate by the perforated plate 13. The injection can be made very fine by using such a perforated plate 13. The perforated plate 13 can be a pre calibrated micro laser drilled plate. Such a pre calibrated micro laser drilled plate gives a liquid fine control of the fuel being injected to the burner assembly.

Such a swirler improves the liquid fuel and air mixing by injection of liquid fuel into the swirler shear layer. As result of the improved liquid fuel and air mixing the emissions from a gas turbine, in which the burner assembly is arranged, can be reduced. Another advantage is the improved serviceability through the modularisation of the components, in particular the swirler 2.

In an example not according to the invention, an existing swirler can be split into two swirler parts 2a, 2b. That means the liquid fuel injections is part of the inner swirler 2a and the air injection is part of the outer swirler 2b. The pilot burner 1 and adaptor plate 9 can be retained in the existing swirler layout, the inner swirler 2a and the outer swirler can be interchanged with the existing swirler. The two swirler elements 2a, 2b are made using conventional machining methods. In order to allow the liquid fuel to be injected at the tip 20a of the swirler vane 10a of the inner swirler 2a the tip 20a or a portion of the tip 20a is built up using laser deposition.

The injection holes 11 can take whatever shape for good mixing, as they are formed using laser deposition. They could be for example rectangular, circular, square or triangular with a single or multiple point of injection. They can be located on either the pressure or suction side, or at both sides, of the injection holes 11, in order to give optimised mixing.

Advantages gained by the invention are the improved fuel mixing, the interchangeable with existing burner assemblies, the reduction in engine emissions, the improved turndown capability and the accurate control of fuel being injected.

It has to be noted that the discussed embodiments are not restricted to a feed with liquid fuel. Gaseous fuels may alternatively or additionally be provided for the inventive burner assembly, swirler, or swirler vane.

## Claims

1. Swirler vane (10a) for providing fuel, particularly a liquid fuel, to a swirling zone (3) of a burner assembly, comprising at least one injection hole (11) for injecting the fuel to the swirling zone (3) of the burner assembly and an injection feed hole passage (12) connecting the at least one injection hole (11) with a main fuel feed, **characterized in that** the swirler vane (10a) or a tip (20a) of the swirler vane (10a), where the at least one injection hole (11) is arranged, is being manufactured by laser deposition or comprises at least a surface being manufactured by laser deposition.

2. Swirler vane (10a) according to claim 1, **characterized in that** the wall of the at least one injection hole (11) is being manufactured by laser deposition.

3. Swirler vane (10a) according to claim 1 or 2, **characterized in that** at least the part of the injection feed hole passage (12), which ends in the at least one injection hole (11), is being manufactured by laser deposition.

4. Swirler vane (10a) according to at least one of the claims 1 to 3, **characterized in that** the swirler vane (10a) is shaped as a pie slice.

5. Swirler vane (10a) according to at least one of the claims 1 to 4, **characterized in that** the at least one injection hole (11) has a rectangular, a circular, a polygonal, an oval or a triangular shape.

6. Swirler (2), comprising a plurality of swirler vanes (10) as claimed in at least one of the preceding claims 1 to 5.

7. Swirler (2) according to claim 6, **characterized in that** a perforated plate (13), which comprises several holes (14), is being placed into the at least one injection hole (11) of each swirler vane (10a).

8. Swirler (2) according to claim 7, **characterized in that** the perforated plate (13) is a micro laser drilled plate.

9. Swirler (2) according to at least one of the claims 6 to 8, **characterized in that** the swirler vanes (10a) build a first part of overall swirler vanes (10), whereby a second part (10b) of the overall swirler vanes (10) comprise at least one second injection hole (5) for injecting a second kind of fuel to the swirling zone (3) of the burner assembly and a second injection feed hole passage (6) connecting the at least one second injection hole (5) with a main second fuel feed (7).

10. Swirler (2) according to claim 9, **characterized in that** the first parts (10a) of the overall swirler vanes (10) build an inner swirler (2a) and the second part (10b) of the overall swirler vanes (10) build an outer swirler (2b).

11. Swirler (2) according to at least one of the claims 6 to 10, **characterized in that** the swirler (2) is part of a gas turbine engine.

12. Burner assembly, in particular of a gas turbine engine, comprising a swirler (2) as claimed in at least one of the preceding claims 6 to 11.

## Patentansprüche

1. Verwirbelungsschaufel (10a) zum Zuführen von Brennstoff, insbesondere eines flüssigen Brennstoffs, zu einer Verwirbelungszone (3) einer Brenneranordnung, welche mindestens ein Einspritzloch (11) zum Einspritzen des Brennstoffs in die Verwirbelungszone (3) der Brenneranordnung und einen Einspritzzufuhrlochdurchlass (12), der das mindestens eine Einspritzloch (11) mit einer Hauptbrennstoffzufuhr verbindet, umfasst, **dadurch gekennzeichnet, dass** die Verwirbelungsschaufel (10a) oder eine Spitze (20a) der Verwirbelungsschaufel (10a), wo das mindestens eine Einspritzloch (11) angeordnet ist, durch Laserabscheidung hergestellt wird oder mindestens eine Fläche umfasst, die durch Laserabscheidung hergestellt wird.

2. Verwirbelungsschaufel (10a) nach Anspruch 1, **dadurch gekennzeichnet, dass** die Wand des mindestens einen Einspritzloches (11) durch Laserabscheidung hergestellt wird.

3. Verwirbelungsschaufel (10a) nach Anspruch 1 oder 2, **dadurch gekennzeichnet, dass** mindestens der Teil des Einspritzzufuhrlochdurchlasses (12), welcher in dem mindestens einen Einspritzloch (11) endet, durch Laserabscheidung hergestellt wird.

4. Verwirbelungsschaufel (10a) nach mindestens einem der Ansprüche 1 bis 3, **dadurch gekennzeichnet, dass** die Verwirbelungsschaufel (10a) in der Form eines Kuchenstücks ausgebildet ist.

5. Verwirbelungsschaufel (10a) nach mindestens einem der Ansprüche 1 bis 4, **dadurch gekennzeichnet, dass** das mindestens eine Einspritzloch (11) eine rechteckige, eine kreisförmige, eine polygonale, eine ovale oder eine dreieckige Form aufweist.

6. Verwirbeler (2), welcher eine Vielzahl von Verwirbelungsschaufeln (10) nach mindestens einem der vorhergehenden Ansprüche 1 bis 5 aufweist.

7. Verwirbeler (2) nach Anspruch 6, **dadurch gekennzeichnet, dass** eine Lochplatte (13), welche mehrere Löcher (14) umfasst, in das mindestens eine Einspritzloch (11) jeder Verwirbelungsschaufel (10a) eingesetzt ist.

8. Verwirbeler (2) nach Anspruch 7, **dadurch gekennzeichnet, dass** die Lochplatte (13) eine mittels Mikrolaser gebohrte Platte ist.

9. Verwirbeler (2) nach mindestens einem der Ansprüche 6 bis 8, **dadurch gekennzeichnet, dass** die Verwirbelungsschaufeln (10a) einen ersten Teil von Gesamt-Verwirbelungsschaufeln (10) bilden, wobei ein zweiter Teil (10b) der Gesamt-Verwirbelungsschaufeln (10) mindestens ein zweites Einspritzloch (5) zum Einspritzen einer zweiten Art von Brennstoff in die Verwirbelungszone (3) der Brenneranordnung und einen zweiten Einspritzzufuhrlochdurchlass (6), der das mindestens eine zweite Einspritzloch (5) mit einer Hauptzufuhr für den zweiten Brennstoff (7) verbindet, umfasst.

10. Verwirbeler (2) nach Anspruch 9, **dadurch gekennzeichnet, dass** die ersten Teile (10a) der Gesamt-Verwirbelungsschaufeln (10) einen inneren Verwirbeler (2a) bilden und die zweiten Teile (10b) der Gesamt-Verwirbelungsschaufeln (10) einen äußeren Verwirbeler (2b) bilden.

11. Verwirbeler (2) nach mindestens einem der Ansprüche 6 bis 10, **dadurch gekennzeichnet, dass** der Verwirbeler (2) Teil eines Gasturbinentriebwerks ist.

12. Brenneranordnung, insbesondere eines Gasturbinentriebwerks, welche einen Verwirbeler (2) nach mindestens einem der vorhergehenden Ansprüche 6 bis 11 umfasst.

## Revendications

1. Aube de turbulence (10a) destinée à fournir un combustible, en particulier un combustible liquide, à une zone de turbulences (3) d'un ensemble brûleur, comprenant au moins un orifice d'injection (11) destiné à injecter le combustible dans la zone de turbulences (3) de l'ensemble brûleur et un passage d'orifice d'alimentation pour injection (12) raccordant l'au moins un orifice d'injection (11) à une alimentation en combustible principale, **caractérisée en ce que** l' aube de turbulence (10a) ou une extrémité (20a) de l' aube de turbulence (10a), où l'au moins un orifice d'injection (11) est agencé, est fabriquée par dépôt au laser ou comprend au moins une surface qui est fabriquée par dépôt au laser.

2. Aube de turbulence (10a) selon la revendication 1, **caractérisée en ce que** la paroi de l'au moins un orifice d'injection (11) est fabriquée par dépôt au laser.

3. Aube de turbulence (10a) selon la revendication 1 ou 2, **caractérisée en ce qu'**au moins la partie du passage d'orifice d'alimentation pour injection (12), qui se termine dans l'au moins un orifice d' injection (11), est fabriquée par dépôt au laser.

4. Aube de turbulence (10a) selon au moins l'une des revendications 1 à 3, **caractérisée en ce que** l'aube de turbulence (10a) est façonnée comme une part de tarte.

5. Aube de turbulence (10a) selon au moins l'une des revendications 1 à 4, **caractérisée en ce que** l'au moins un orifice d'injection (11) a une forme rectangulaire, circulaire, polygonale, ovale ou triangulaire.

6. Générateur de turbulences (2), comprenant une pluralité d'aubes de turbulence (10) selon au moins l'une des revendications précédentes 1 à 5.

7. Générateur de turbulences (2) selon la revendication 6, **caractérisé en ce qu'**une plaque perforée (13), qui comprend plusieurs orifices (14), est placée dans l'au moins un orifice d'injection (11) de chaque aube de turbulence (10a).

8. Générateur de turbulences (2) selon la revendication 7, **caractérisé en ce que** la plaque perforée (13) est une plaque percée par microlaser.

9. Générateur de turbulences (2) selon au moins l'une des revendications 6 à 8, **caractérisé en ce que** les aubes de turbulence (10a) forment une première partie d'aubes de turbulence totales (10), moyennant quoi une seconde partie (10b) des aubes de turbulence totales (10) comprend au moins un second orifice d'injection (5) destiné à injecter un second type de combustible dans la zone de turbulences (3) de l'ensemble brûleur et un second passage d'orifice d'alimentation pour injection (6) raccordant l'au moins un second orifice d'injection (5) à une seconde alimentation en combustible principale (7).

10. Générateur de turbulences (2) selon la revendication 9, **caractérisé en ce que** les premières parties (10a) des aubes de turbulence totales (10) forment un générateur de turbulences interne (2a) et les secondes parties (10b) des aubes de turbulence totales (10) forment un générateur de turbulences externe (2b).

11. Générateur de turbulences (2) selon au moins l'une des revendications 6 à 10, **caractérisé en ce que** le générateur de turbulences (2) fait partie d'une turbine à gaz.

12. Ensemble brûleur, en particulier d'une turbine à gaz, comprenant un générateur de turbulences (2) selon au moins l'une des revendications précédentes 6 à 11.
